# FASCICULE DE BREVET EUROPEEN

(11) **EP 4 093 946 B1**
(45) Date de publication et mention de la délivrance du brevet: **28.02.2024**
(21) Numéro de dépôt: 21719698.9
(22) Date de dépôt: 15.01.2021
(51) Int. Cl.: F01D 5/30, F01D 25/12, F01D 5/08

(54) **DISPOSITIF AMÉLIORÉ DE DÉTECTION D'ANOMALIE DE REFROIDISSEMENT POUR TURBOMACHINE D'AÉRONEF**
VERBESSERTE VORRICHTUNG ZUR ERKENNUNG VON KÜHLANOMALIEN FÜR EIN FLUGTRIEBWERK
IMPROVED DEVICE FOR DETECTING COOLING ABNORMALITIES FOR AN AIRCRAFT TURBINE ENGINE

(30) Priorité: 24.01.2020 FR 2000693
(43) Date de publication de la demande: 30.11.2022
(73) Titulaire: SAFRAN AIRCRAFT ENGINES, 75015 Paris (FR)
(72) Inventeur: FONTANEL, Eddy, Stéphane, Joël, 77550 MOISSY-CRAMAYEL (FR); ATTALI, Matthieu, Etienne, 77550 MOISSY-CRAMAYEL (FR); GAUTHIER, Gérard, Philippe, 77550 MOISSY-CRAMAYEL (FR); SCHWEBLEN, Wilfried, Lionel, 77550 MOISSY-CRAMAYEL (FR)
(74) Mandataire: Cabinet Beau de Loménie
(86) Numéro de dépôt international: PCT/FR2021/050069
(87) Numéro de publication internationale: WO 2021/148740

(56) Documents cités:
- EP-A1- 1 832 712
- EP-A1- 2 438 273
- DE-U1-202011 109 225
- FR-A1- 3 077 327

## Description

### Domaine Technique

L'invention concerne le domaine des turbomachines. Plus précisément, l'invention concerne la détection d'anomalie de refroidissement d'une turbine dans une turbomachine d'aéronef.

### Technique antérieure

Il est courant, dans une turbomachine, de prélever de l'air sur un compresseur disposé en amont, par exemple un compresseur haute pression pour refroidir des pièces dans des étages en aval présentant un environnement plus chaud. L'amont et l'aval s'entendent selon le sens d'écoulement de l'air dans la turbomachine. L'air de refroidissement prélevé sur le compresseur haute pression est par exemple acheminé vers la turbine basse pression, ou vers la turbine haute pression de la turbomachine. L'air acheminé permet alors d'assurer un débit de purge, permettant la purge de l'air chaud et la ventilation de certaines pièces (ex : disques, aubes mobiles) de ces turbines. Un tel débit de purge de l'air chaud permet de limiter l'introduction de l'air chaud s'écoulant dans la veine primaire et entraînant en rotation les aubes du rotor, dans les zones situées sous ladite veine primaire. Ainsi, les risques de surchauffe des pièces mobiles des turbines, pouvant aboutir à une dégradation de celles-ci et dans le pire des cas, à une rupture de ces pièces, sont limités.

Par ailleurs, en vue de garantir la conformité des dispositifs de refroidissement aux normes aéronautiques, il est courant de sur-dimensionner ces dispositifs de refroidissement.

A titre d'exemple, il est possible de réaliser un dispositif comprenant plusieurs canaux de prélèvement d'air sur le compresseur haute pression, ces canaux assurant également la circulation de l'air prélevé vers la turbine basse pression ou vers la turbine haute pression afin de refroidir celles-ci. De tels canaux forment ainsi un dispositif de refroidissement de ces turbines. Un surdimensionnement de ce dispositif de refroidissement peut alors consister à réaliser des canaux présentant un diamètre plus important que nécessaire, ces canaux acheminant alors plus d'air que nécessaire pour refroidir la turbine basse pression ou haute pression, ou encore d'augmenter le nombre de canaux. Avantageusement, ce surdimensionnement permet de garantir en cas de dysfonctionnement, par exemple en cas d'obstruction partielle, de perçage partiel ou de rupture d'un canal, que le dispositif continue à délivrer suffisamment d'air de refroidissement à la turbine basse pression ou haute pression. Un autre exemple de dysfonctionnement peut être causé par une dégradation de l'étanchéité de la turbine, due par exemple à l'usure d'un joint labyrinthe de la turbine basse ou haute pression, entraînant une fuite d'air de refroidissement et donc une diminution du débit de purge d'air chaud. EP 2 438 273 A1 divulgue un autre exemple de turbine avec un circuit de refroidissement.

Bien que fiables, les surdimensionnements des dispositifs de refroidissement décrits ci-dessus conduisent à prélever plus d'air que réellement nécessaire sur le compresseur haute pression dans une situation nominale de fonctionnement de la turbomachine, par exemple en l'absence de défaillance d'un canal de circulation d'air, de telles défaillances étant par ailleurs exceptionnelles. Un tel sur-prélèvement d'air impacte alors de manière non négligeable la consommation spécifique en carburant (SFC) de l'aéronef, et induit une dégradation des performances du moteur. Des dispositifs de détection de dysfonctionnements existent, mais nécessitent généralement une intervention extérieure, augmentant le risque de détérioration des pièces et du moteur.

Il est donc souhaitable d'améliorer les performances de la turbomachine, notamment de limiter l'impact des systèmes de refroidissement sur la consommation en carburant de l'aéronef, tout en limitant les risques de surchauffe des pièces mobiles des turbines et de détérioration de celles-ci.

### Exposé de l'invention

Afin de résoudre au moins en partie les inconvénient mentionnés ci-dessus, le présent exposé concerne un rotor de turbine pour turbomachine d'aéronef comprenant :
- au moins un disque mobile supportant des aubes mobiles, le disque mobile comprenant une pluralité d'alvéoles dans lesquelles sont insérés les pieds des aubes mobiles, un passage étant formé entre le fond des alvéoles et les pieds des aubes mobiles insérés dans lesdites alvéoles,
- un canal de circulation configuré pour permettre la circulation d'un fluide, le canal de circulation comprenant ledit passage,
- un dispositif de calibration configuré pour permettre l'écoulement d'un premier débit de fluide dans le canal de circulation lorsque la température au sein du canal de circulation est inférieure à une valeur seuil prédéterminée de température, et pour changer d'état de manière à permettre l'écoulement d'un deuxième débit de fluide, supérieur au premier débit, dans le canal de circulation, lorsque la température au sein du canal de circulation est supérieure ou égale à ladite valeur seuil prédéterminée de température, le dispositif de calibration comprenant un matériau fusible configuré pour fondre au moins en partie lorsque la température au sein du canal de circulation atteint la valeur seuil prédéterminée.

Dans la suite de l'exposé, un fonctionnement nominal moteur, ou du rotor de la turbine désigne un fonctionnement dans lequel aucune panne du circuit de refroidissement de la turbine n'existe. On notera que ce fonctionnement nominal peut comprendre l'usure de la turbomachine, mais pas les cas de pannes telles que la rupture d'un canal d'alimentation d'air.

En fonctionnement nominal, une partie du débit de purge passe dans le canal de circulation, notamment dans le passage existant entre le fond des alvéoles et le pied des aubes mobiles insérés dans lesdites alvéoles. Ce passage peut être le jeu existant entre le fond de l'alvéole et le pied inséré dans ladite alvéole. Le premier débit de fluide correspondant donc au débit d'air de refroidissement circulant dans le canal de circulation, notamment dans ledit passage, dans des conditions de fonctionnement nominal. Ces conditions se caractérisent par une température, au sein du canal de circulation, restant inférieure à une valeur seuil.

Le dépassement de cette valeur seuil de la température est caractéristique d'un débit d'air de refroidissement insuffisant, c'est-à-dire une diminution du débit de purge, engendrée par une anomalie apparue dans le circuit de refroidissement de la turbomachine. On comprend par circuit de refroidissement de la turbomachine, le circuit suivi par l'air de refroidissement, depuis son prélèvement au niveau du compresseur, jusqu'à son passage dans le canal de circulation du rotor. Par conséquent, l'élément défectueux du circuit de refroidissement de la turbomachine peut être un élément au niveau du prélèvement de l'air au compresseur, un des canaux acheminant l'air du compresseur aux turbines, une boite de répartition d'air, des passages de purges entres les aubes mobiles et des parties fixes, et des joints dynamiques entre des parties mobiles et fixes de la turbine.

L'apparition d'une anomalie engendre une diminution du débit de purge, et donc une augmentation de l'introduction d'air chaud provenant de la veine primaire. Cet air chaud, en pénétrant dans le canal de circulation, augmente la température au sein de ce dernier. Un dépassement de la valeur seuil de température provoque un changement d'état du dispositif de calibration, entraînant une augmentation du débit de fluide, dans ce cas de figure du débit d'air chaud provenant de la veine primaire et s'écoulant dans le canal de circulation, notamment dans le passage entre le fond des alvéoles et le pied des aubes. Un changement d'état du dispositif de calibration peut comprendre une dégradation de ce dernier, une fusion, un fluage, ou le détachement de celui-ci.

L'augmentation du débit, entre le premier débit et le deuxième débit, entraîne alors une augmentation de la température dans le passage sous le pied de l'aube, provoquant une dégradation de ce dernier. Le pied ne pouvant alors plus remplir sa fonction de rétention de l'aube mobile, cette dernière se détache alors de sa fixation, et est libérée dans la veine primaire. De manière connue, un dispositif de sécurité dit IFSD (pour « In Flight Shut Down » en anglais) permet, en cas de libération ou de détachement d'une aube, de créer instantanément un balourd dynamique générant une alarme dans le cockpit, incitant un utilisateur à arrêter immédiatement le moteur. Ce dispositif de calibration permet ainsi d'assurer une libération d'au moins une aube, entraînant l'arrêt du moteur, dès les premiers effets de la panne, et bien avant une dégradation du disque mobile due à la réintroduction des gaz chauds provenant de la veine primaire.

Il est ainsi possible, par le détachement d'une aube, d'obtenir un arrêt du moteur, et ainsi de détecter la présence d'un dysfonctionnement ou d'une panne, sans nécessiter un surdimensionnement permanent du dispositif de refroidissement. Un dispositif permettant un arrêt automatique du moteur, en cas de détachement d'une aube, peut également être prévu. Une telle détection peut être ainsi réalisée sans nécessiter une intervention extérieure d'un opérateur.

L'impact du système de refroidissement sur la consommation en carburant est ainsi limité, ce qui permet ainsi d'améliorer les performances du moteur. Par ailleurs, cette configuration permet de détecter la présence d'une anomalie sans nécessiter l'ajout de capteurs supplémentaires tel qu'un capteur de température, par exemple.

Dans certains modes de réalisation, le dispositif de calibration comprend au moins une partie du pied d'au moins une aube mobile du disque mobile.

Le dispositif de calibration est ainsi au plus proche de l'air s'écoulant dans le passage sous le pied de l'aube. Ainsi, Lors de l'apparition d'une anomalie engendrant une augmentation de l'introduction d'air chaud provenant de la veine primaire, le détachement de l'aube intervient plus rapidement, permettant une détection d'anomalie plus efficace. Cela permet notamment de limiter le risque d'une dégradation du disque due à cette anomalie, et à l'augmentation de la température qui en est la conséquence.

Dans certains modes de réalisation, ladite partie du pied d'aube est configurée pour passer d'un premier état dans lequel elle présente une première structure géométrique, lorsque la température au sein du canal de circulation est inférieure à la valeur seuil prédéterminée, à un deuxième état dans lequel elle présente une deuxième structure géométrique différente de la première structure géométrique et entraînant une augmentation de la section du passage existant entre le fond des alvéoles et le pied des aubes mobiles, lorsque la température au sein du canal de circulation est supérieure ou égale à ladite valeur seuil prédéterminée.

Le premier état correspond par exemple à une forme dite usuelle du pied de l'aube, c'est-à-dire la forme qu'aurait le pied d'une aube montée sur un rotor ne comprenant pas de dispositif de calibration. Le deuxième état correspond à une déformation provoquée par le fluage de cette partie, ou encore le détachement partiel ou complet de celle-ci. En d'autres termes, la forme de la deuxième structure géométrique est telle que la section de passage résultant de cette déformation est plus grande que la section de passage initiale, lorsque ladite partie du pied d'aube présente la première structure géométrique. Ce changement de géométrie revient par conséquent à une augmentation du jeu existant entre le pied de l'aube et le fond de l'alvéole. Ce passage du premier au deuxième état, provoqué par le dépassement de la valeur seuil de température, permet l'augmentation du débit d'air chaud dans le passage sous le pied d'aube. L'augmentation de la température en résultant entraîne une dégradation du pied de l'aube, par ailleurs déjà fragilisé par le changement d'état de ladite partie du pied de l'aube, et ainsi le détachement de cette dernière.

Dans certains modes de réalisation, ladite partie du pied d'aube comprend un matériau fusible configuré pour fondre au moins en partie lorsque la température au sein du canal de circulation atteint la valeur seuil prédéterminée.

En d'autres termes, la valeur seuil prédéterminée correspond à la température de fusion de la partie du pied d'aube comprenant le matériau fusible. Le matériau de la partie du pied d'aube doit donc de préférence être choisi de manière à ce que sa température de fusion soit inférieure à la température critique à partir de laquelle les éléments de la turbine tels que le disque se détériorent. Ainsi, en cas de fusion partielle, entraînant un fluage de la partie du pied d'aube, ou totale, ladite partie du pied d'aube passe du premier état dans lequel elle présente la première structure géométrique, à un deuxième état dans lequel elle présente une deuxième structure géométrique, entraînant ainsi l'augmentation du débit d'air chaud, et donc le détachement de l'aube.

Dans certains modes de réalisation, le rotor comprend une paroi annulaire s'étendant axialement entre deux disques mobiles du rotor, la paroi annulaire comprenant une pluralité d'orifices de circulation, le canal de circulation comprenant ladite pluralité d'orifices, le dispositif de calibration comprenant au moins une rondelle fusible fixée sur au moins un orifice de circulation de la pluralité d'orifices.

De préférence, chaque orifice de circulation de la paroi annulaire est disposé en vis-à-vis du pied d'une aube mobile, de telle sorte que l'air s'écoulant dans le passage sous le pied d'aube traverse ensuite ledit orifice, le canal de circulation comprenant ainsi ledit passage et ledit orifice. L'air traversant chacun de ces orifices permet notamment d'alimenter en air de refroidissement la région disposée au-dessus de la paroi annulaire et au-dessous d'une aube de stator.

Par ailleurs, le dispositif de calibration peut comprendre la rondelle fusible à la place de la partie fusible du pied d'aube, ou en plus de celle-ci. Selon le même mécanisme que celui décrit plus haut, une augmentation de la température de l'air s'écoulant dans le canal de circulation, notamment dans le passage sous le pied d'aube puis à travers l'orifice sur lequel est fixée la rondelle fusible, engendre une modification de l'état de cette rondelle, et notamment une augmentation du diamètre de l'orifice sur lequel est fixée la rondelle. Cette augmentation du diamètre engendre une augmentation du débit d'air chaud en cas d'anomalie, et par conséquent, un détachement de l'aube.

Dans certains modes de réalisation, ladite rondelle fusible est configurée pour passer d'un premier état dans lequel elle présente une première structure géométrique définissant le diamètre de l'orifice de circulation sur lequel elle est fixée, lorsque la température au sein du canal de circulation est inférieure à la valeur seuil prédéterminée, à un deuxième état dans lequel elle présente une deuxième structure géométrique différente de la première structure géométrique et entraînant une augmentation du diamètre dudit orifice, lorsque la température au sein du canal de circulation est supérieure ou égale à ladite valeur seuil prédéterminée.

Dans le premier état, la rondelle fusible peut présenter une forme permettant à l'orifice sur lequel est fixée la rondelle, d'avoir un diamètre identique au diamètre des autres orifices de la paroi annulaire ne comprenant pas de rondelle fusible. Le deuxième état correspond à une forme dans laquelle le diamètre dudit orifice est augmenté.

Dans certains modes de réalisation, ladite rondelle fusible comprend un matériau fusible configuré pour fondre au moins en partie lorsque la température au sein du canal de circulation atteint la valeur seuil prédéterminée.

Le matériau fusible de la rondelle fusible peut être différent du matériau de la partie fusible du pied d'aube, et présenter une gamme de températures de fusion différente.

Dans certains modes de réalisation, le rotor comprend une pluralité de disques mobiles, le dispositif de calibration étant disposé sur un disque mobile amont de la pluralité de disques mobiles, le disque mobile amont étant disposé en amont de la pluralité de disques mobiles selon le sens d'écoulement d'un air chaud le long de l'axe de rotation du rotor.

Le disque amont étant le premier étage des disques à être exposé à l'air chaud en cas de dysfonctionnement de la purge de l'air chaud, le fait de disposer le dispositif de calibration sur ce disque amont permet à ce dispositif de changer d'état plus vite en cas d'augmentation de le température due à une anomalie, et ainsi d'améliorer l'efficacité de la détection d'une telle anomalie par la libération d'au moins une aube.

Dans certains modes de réalisation, la valeur seuil de température est comprise entre 700 et 850 °C.

Dans certains modes de réalisation, une première valeur seuil de température, correspondant à une température de fusion de la partie fusible du pied d'aube, est comprise entre 700 et 780 °C, et une deuxième valeur seuil de température, correspondant à une température de fusion de la rondelle fusible, est comprise entre 800 et 850 °C.

Cette température seuil est de préférence inférieure à une température critique à partir de laquelle les éléments de la turbine tels que les pieds des aubes et le disque se détériorent. Ainsi, lorsque la valeur seuil de température au sein du canal de circulation est atteinte, le changement d'état du dispositif de calibration, et ainsi la libération des aubes concernées, permet de provoquer l'arrêt du moteur avant que le disque portant les aubes ne se détériore.

Le présent exposé concerne également une turbine pour turbomachine d'aéronef comprenant une veine annulaire d'écoulement d'air chaud et le rotor selon l'un quelconque des modes de réalisation précédents.

L'air chaud s'écoulant dans la veine annulaire est l'air provenant de la combustion du moteur de la turbomachine, et permettant d'entraîner les aubes du rotor de la turbine.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 est une vue en coupe longitudinale d'une turbomachine équipée d'un dispositif d'injection ;
[Fig. 2] La figure 2 représente une vue en coupe longitudinale et partielle d'une turbine basse pression dans une turbomachine selon le présent exposé ;
[Fig. 3A-3B] La figure 3A représente une vue dans un plan de coupe perpendiculaire à la direction longitudinale d'un pied d'aube mobile d'une turbine selon le présent exposé, sans dispositif de calibration, et la figure 3B représente une vue dans un plan de coupe perpendiculaire à la direction longitudinale d'un pied d'aube mobile d'une turbine selon le présent exposé, avec dispositif de calibration ;
[Fig. 4] la figure 4 représente une vue détaillée d'un étage amont de la turbine basse pression de la figure 2 ;

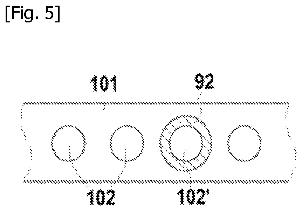

[Fig. 5] la figure 5 représente une vue de dessus, selon la direction V, d'une paroi annulaire de l'étage amont de la figure 4.

### Description des modes de réalisation

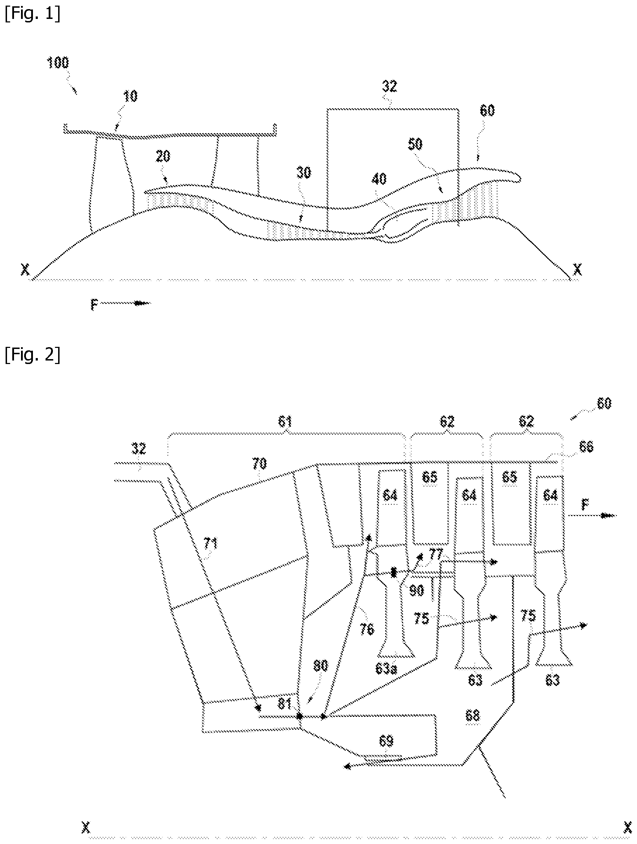

Les termes « amont » et « aval » sont par la suite définis par rapport au sens d'écoulement des gaz au travers une turbomachine, indiqué par la flèche F sur la figure 1.

La figure 1 illustre une turbomachine 100 à double flux comprenant de manière connue d'amont en aval successivement au moins une soufflante 10, une partie moteur comprenant successivement au moins un étage de compresseur basse pression 20, de compresseur haute pression 30, une chambre de combustion 40, au moins un étage de turbine haute pression 50 et de turbine basse pression 60.

Des rotors, tournant autour de l'axe principal X de la turbomachine 100 et pouvant être couplés entre eux par différents systèmes de transmission et d'engrenages, correspondent à ces différents éléments.

De manière connue, une fraction d'air est prélevée sur le compresseur haute pression 30 et est acheminée par l'intermédiaire d'un ou plusieurs conduits de refroidissement 32 en vue de refroidir des zones plus chaudes de la turbomachine 100, notamment la turbine haute pression 50 et la turbine basse pression 60.

La figure 2 est un agrandissement d'une zone de la turbomachine 100, illustrant de manière simplifiée la partie amont de la turbine basse pression 60. Bien que la suite de la description fasse référence à la turbine basse pression 60, par soucis de simplification, cet exemple n'est pas limitatif, l'invention étant également applicable à la turbine haute pression 50.

La turbine basse pression 60 ici illustrée comprend une pluralité d'étages 61, 62 de turbine. Un premier étage 61, ainsi que les étages 62 situés en aval de celui-ci comprennent respectivement un ensemble de distributeurs fixes 70 et 65. Chaque étage 61, 62 comprend en outre des disques 63 mobiles sur lesquels est monté un ensemble d'aubes 64 fixées dans des alvéoles disposées dans une jante des disques 63, les aubes 64 étant entraînées en rotation par le disque 63 mobile. Les disques mobiles 63 sont fixés axialement les uns aux autres le long de l'axe principal X, pour former les différents étages 61, 62 de la turbine 60.

Le premier étage 61 de la turbine basse pression 60 comprend au moins un disque mobile amont 63a, ainsi qu'au moins un distributeur 70 creux, dans lequel circule de l'air de refroidissement. Dans l'exemple illustré sur la figure 2, le distributeur 70 est creux pour laisser passer de l'air de refroidissement, sortant par l'intermédiaire d'un dispositif d'injection 80 associés au distributeur 70, comprenant une pluralité d'injecteurs 81. Les étages 62 suivants, situés en aval du premier étage 61 de la turbine basse pression 60, comprennent chacun au moins une aube 64 mobile et un distributeur 65, ou stator, se présentant sous la forme d'un aubage fixe. Les disques 63 mobiles sont solidaires en rotation d'un arbre basse pression s'étendant selon l'axe X, tandis que chaque stator 65 est relié au carter 66 de la turbine.

La turbomachine comprend un dispositif de refroidissement permettant d'acheminer, via le conduit de refroidissement 32, la fraction d'air prélevée sur le compresseur haute pression 30 vers au moins un étage de la turbine basse pression 60. Dans le mode de réalisation décrit ci-dessous, la fraction d'air de refroidissement prélevée est distribuée au niveau d'un étage aval de la turbine haute pression 50 (non représenté) et d'un étage amont de la turbine basse pression 60. Les turbines haute et basse pression 50, 60 sont ainsi refroidies. Cependant, l'invention n'est pas limitée à ce mode de réalisation, la fraction d'air prélevée pouvant être également distribuée à d'autres étages des turbines.

Dans le mode de réalisation illustré sur la Figure 2, la fraction d'air prélevée dans le compresseur haute pression 30 s'écoule dans le conduit de refroidissement 32, puis dans le distributeur 70 creux. La direction de circulation de la fraction d'air au travers du distributeur creux 70 est illustrée par les flèches 71. La fraction d'air est ensuite injectée via les injecteurs 81 dans une cavité sous veine 68. L'air distribué permet notamment de refroidir les disques 63 de la turbine, comme l'illustrent les flèches 75.

Le dispositif d'injection 80 comporte une pluralité d'injecteurs 81 répartis sur une paroi du distributeur 70 autour de l'axe X. Afin de simplifier la description de ce mode de réalisation, un seul injecteur 81 est représenté sur la figure 2. L'injecteur 81 est un orifice réalisé dans la paroi du distributeur 70, permettant d'injecter en permanence, c'est-à-dire de manière continue lorsque la turbomachine est en fonctionnement, un débit d'air de refroidissement dans la cavité sous veine 68. Ce débit permet d'assurer le maintien en température de la turbine basse pression 60 dans des conditions de fonctionnement nominal de celle-ci, c'est-à-dire en l'absence d'un des dysfonctionnements mentionnés ci-dessus. Les dimensions de l'orifice sont déterminées de manière à ce que le débit soit par exemple compris entre 270 et 310 g/s.

Plus précisément, l'air de refroidissement injecté par les injecteurs 81 permet la purge de l'air chaud présent dans la turbine basse pression 60, assurant ainsi le refroidissement de celles-ci. L'air de refroidissement prélevé dans le compresseur haute pression 30 et acheminé jusque dans la cavité sous veine 68, constitue une barrière de pression, ou purge, empêchant l'air chaud provenant de la chambre de combustion et s'écoulant dans la veine primaire de circulation d'air de la turbomachine 100, de pénétrer dans la cavité sous veine 68 dans l'espace entre les rotors et des stators de la turbine. On entend par veine primaire la veine principale de circulation d'air des turbines, illustré par la flèche F sur la figure 2. La purge de l'air chaud de la turbine basse pression 60 est ici symbolisée notamment par la flèche 76. Les risques de surchauffe des rotors des turbines sont ainsi limités. En particulier, en empêchant l'air de la veine primaire de rentrer dans la cavité sous veine 68, cette cavité est moins chaude que la veine, et les rotors de turbine peuvent donc résister à des efforts centrifuge plus élevé et être dimensionnés sur des contraintes limites moins élevées.

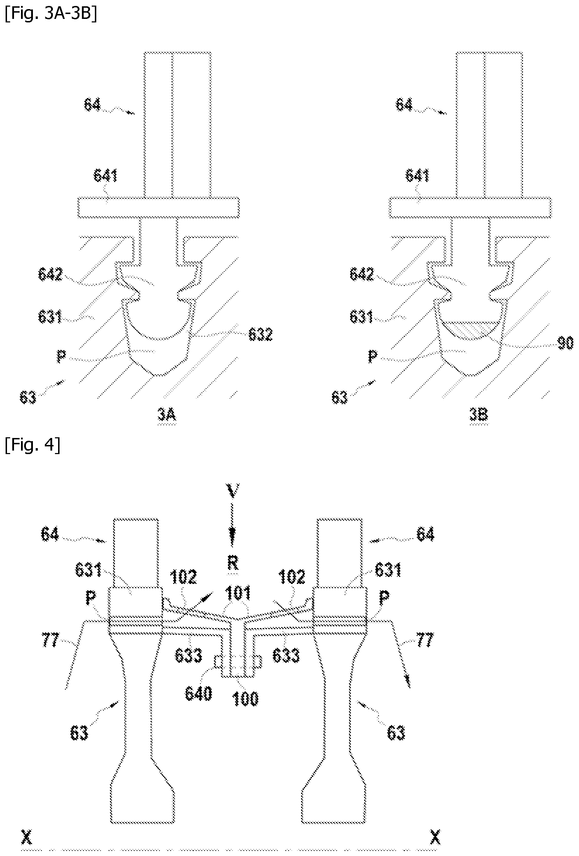

La figure 3A représente schématiquement une vue détaillée dans une coupe perpendiculaire à l'axe X, c'est-à-dire une vue de face, d'une extrémité radialement externe d'un disque 63, notamment une alvéole 632 formée entre deux dents 631 du disque 63. Les aubes 64 comprennent chacune un pied 642, séparé du reste de l'aube par une plateforme 641, et ayant une forme complémentaire à celle de l'alvéole 632, dans laquelle il peut s'insérer. De l'air circule également dans le passage P formé entre le pied 642 des aubes 64, et le fond des alvéoles 632 dans lesquelles les pieds 642 sont insérés. Le passage P se trouve sur un canal de circulation d'air de refroidissement. Ce canal de circulation, comprenant le passage P, dans lequel circule un courant d'air illustré par la flèche 77, permet de refroidir ces zones de pieds d'aubes fortement contraintes.

La figure 4 représente schématiquement une vue détaillée latérale, c'est-à-dire perpendiculaire à l'axe X, de deux disques mobiles 63 de la turbine basse pression 60. Les disques 63 du rotor sont fixés les uns aux autres par boulonnage de brides annulaires 633 s'étendant axialement les unes en direction des autres depuis chaque disque 63. Une paroi sensiblement cylindrique et annulaire 101 s'étend également entre deux disques adjacents 63. La paroi 101 est formée à l'extrémité radialement externe d'une paroi radiale 100 intercalée entre les deux brides annulaires 633 et fixée au moyen des boulons de fixation 640 des brides annulaires 633. Cette paroi annulaire 101 permet notamment de porter les léchettes (non représentées) venant en contact avec une couche abradable portée par un stator 65.

La paroi 101 comprend une pluralité d'orifices 102. Le canal de circulation comprend également ces orifices 102, à travers lesquels peut s'écouler le courant 77 d'air de refroidissement, dans le cas d'un fonctionnement nominal, ou d'air chaud, en cas d'anomalie. Ces orifices 102 permettent notamment de calibrer le débit d'air de refroidissement passant par le passage P, en présentant notamment une section de passage plus faible que le passage P. En particulier, un orifice 102 peut être disposé au regard de chaque pied 642 des aubes 64. Le canal de circulation d'air de refroidissement, comprenant le passage P et les orifices 102, permet en outre, lors d'un fonctionnement nominal, de limiter la réintroduction des gaz chauds, provenant de la veine primaire d'écoulement d'air chaud, dans la région R entre la paroi 101 et la plateforme (non illustrée) supportant les aubes fixes du stator 65.

Un dysfonctionnement du refroidissement des turbines peut avoir plusieurs causes. Une cause du dysfonctionnement du refroidissement peut être le dysfonctionnement d'un conduit 32, par exemple la rupture ou l'obturation accidentelle d'un des conduits 32 de circulation d'air. Une autre cause de ce dysfonctionnement peut résulter de l'usure excessive ou de la rupture d'un ou plusieurs joints d'étanchéité, ou joint dynamique de la turbine basse pression 60. Un dysfonctionnement du refroidissement de la turbine 60 résulte à titre d'exemple d'une défaillance d'un joint labyrinthe 69 entre le partie stator et la partie rotor, assurant l'isolation en pression de la cavité sous veine 68 de la turbine basse pression 60.

Le rotor de la turbine basse pression 60 comprend un dispositif de calibration, permettant de calibrer le débit d'air du courant 77 s'écoulant dans le canal de circulation, de la manière décrite ci-dessous.

Dans un premier mode de réalisation, le dispositif de calibration comprend une portion, dite « portion fusible 90 ». La figure 3B est une vue similaire à celle de la figure 3A. Selon cette vue, la portion 90 d'au moins un pied 642 de l'aube 64 comprend un matériau différent du matériau du reste du pied 642 et de l'aube 64. La portion 90 comprenant le matériau différent, dite «portion fusible 90», peut être une portion délimitant, avec le fond de l'alvéole 632, le passage P. En particulier, la portion 90 peut être une portion inférieure du pied 642, c'est-à-dire la portion la plus proche du fond de l'alvéole 632, représentant au moins 1/4 du volume total du pied 642, de préférence au moins 1/3, de préférence encore au moins la moitié. Cette portion 90 du pied 642 peut être fixée au reste du pied 642 par brasage. Par ailleurs, les figures 3A et 3B illustrent un exemple dans lequel les pieds 642 ont une forme en pied de sapin. Néanmoins, cet exemple n'est pas limitatif, l'invention pouvant s'appliquer à d'autres formes de pieds d'aube, par exemple une forme en queue d'aronde.

La portion fusible 90 peut comporter, par exemple, un matériau eutectique comprenant 72% d'argent et 28% de cuivre, et présenter une température de fusion, ou de fluage, de 780°C. Cette température de fusion, et par conséquent le matériau choisi pour la portion fusible 90, est déterminé de manière à ce que, dans des conditions de fonctionnement nominal, la température au sein canal de circulation reste inférieure à cette température de fusion de la portion fusible 90. Ainsi, dans des conditions de fonctionnement nominal, la portion fusible 90 présente une forme constante, permettant ainsi de maintenir une section constante du passage P et donc un débit constant dans le canal de circulation.

Lorsqu'un des dysfonctionnements mentionnés ci-dessus se produit, le débit de purge diminue, entraînant l'introduction de gaz chaud provenant de la veine primaire, ces gaz chaud pouvant s'introduire dans le canal de circulation, notamment dans le passage P. La température au sein du canal de circulation augmente alors et atteint des valeurs supérieures aux températures représentatives d'un fonctionnement nominal.

Lorsque la température au sein du canal de circulation atteint la température de fusion de la portion fusible 90, cette dernière fond au moins en partie et/ou se déforme sous l'effet du fluage, engendrant ainsi une modification de la section du passage P, notamment son augmentation. L'augmentation de la section du passage P entraîne une augmentation du débit du courant 77 d'air chaud, provenant de la veine primaire, dans le canal de circulation. Cette augmentation du débit d'air chaud a pour effet d'accroitre de manière important et quasi instantanée la température dans cette zone du pied d'aube, entraînant une dégradation rapide des pieds 642 des aubes 64 concernées. Les pieds 642 ne peuvent alors plus remplir leur fonction de rétention des aubes 64, entraînant la libération de ces aubes 64 dans la veine primaire.

De manière connue, un dispositif de sécurité dit IFSD (pour « In Flight Shut Down » en anglais) permet, en cas de libération ou de détachement d'une aube, de créer instantanément un balourd dynamique générant une alarme dans le cockpit, incitant un utilisateur à arrêter immédiatement le moteur. Dans une telle situation, le carter de turbine basse pression 60 est configuré pour retenir les aubes 64 qui se sont détachées à l'intérieur du moteur, évitant une dégradation d'autres parties de la turbomachine. Le nombre d'aubes 64 dites « aubes fusibles », c'est-à-dire les aubes dont le pied 642 comprenant une portion fusible 90, n'est pas limité, une, deux ou davantage d'entre elles pouvant en être équipées. Par ailleurs, selon ce mode de réalisation, la ou les portion(s) fusible(s) 90 sont disposées sur les aubes 64 du disque amont 63a. La portion fusible 90 est ainsi fixée dans la turbine au plus près du courant 76 de purge de l'air chaud de la turbine basse pression 60.

Selon un deuxième mode de réalisation, la portion fusible 90 est une première portion fusible, le rotor de la turbine basse pression 60 comportant une deuxième portion fusible 92. Selon ce deuxième mode de réalisation, le dispositif de calibration comprend la deuxième portion fusible 92. Plus précisément, au moins un des orifices 102 de la paroi 101 agit comme un orifice fusible 102'. En fonctionnement nominal de la turbine, cet orifice fusible 102' présente un diamètre identique au diamètre des autres orifices 102. Cependant, le contour de cet orifice fusible 102' est délimité par la deuxième portion fusible 92, présentant la forme d'un anneau, ou rondelle, de diamètre interne égal au diamètre des autres orifices 102, et de diamètre externe égal à au moins 1,5 fois le diamètre interne, de préférence au moins 1,8 fois le diamètre interne. La deuxième portion fusible 92 peut être fixée par brasage à la paroi 101.

On notera en outre que la deuxième portion fusible 92 comprend de préférence un matériau différent de la première portion fusible 90, et présentant une température de fusion plus élevée.

Ainsi, dans des conditions de fonctionnement nominal, la portion fusible 92 présente une forme constante, permettant ainsi de maintenir constant le diamètre de l'orifice 102', et égal au diamètre des orifices 102 non équipés de la deuxième portion fusible 92. Un débit sensiblement constant dans le canal de circulation peut ainsi être maintenu.

Lorsqu'un des dysfonctionnements mentionnés ci-dessus se produit, le débit de purge diminue, entraînant l'introduction de gaz chaud provenant de la veine primaire, ces gaz chaud pouvant s'introduire dans le canal de circulation, notamment dans le passage P, puis à travers les orifices 102 et 102'. La température au sein du canal de circulation augmente alors et atteint des valeurs supérieures aux températures représentatives d'un fonctionnement nominal.

Lorsque la température au sein du canal de circulation atteint la température de fusion de la deuxième portion fusible 92, cette dernière fond au moins en partie et/ou se déforme sous l'effet du fluage, engendrant ainsi une modification du diamètre de l'orifice 102', notamment son augmentation. L'augmentation du diamètre de l'orifice 102' entraîne une augmentation du débit du courant 77 d'air chaud, provenant de la veine primaire, dans le canal de circulation.

Cette augmentation du débit d'air chaud a pour effet d'accroitre de manière importante et quasi instantanée la température dans cette zone du pied d'aube, entraînant une dégradation rapide des pieds 642 des aubes 64 concernées. Les conséquences décrites ci-dessus, dans le cas de la première portion fusible 90, se produisent alors également.

Par ailleurs, le nombre d'orifice 102' dits « orifices fusibles », c'est-à-dire les orifices 102' comprenant la deuxième portion fusible 92, n'est pas limité, un, deux ou davantage d'entre eux pouvant en être équipés.

En outre, l'une ou l'autre de la première ou de la deuxième portion fusible 90, 92 peuvent être utilisées. De manière alternative, le premier et le deuxième mode de réalisation peuvent être combinés, la première et la deuxième portion fusible 90, 92 pouvant être utilisées simultanément.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Rotor de turbine (60) pour turbomachine d'aéronef comprenant :
- au moins un disque mobile (63) supportant des aubes mobiles (64), le disque mobile (63) comprenant une pluralité d'alvéoles (632) dans lesquelles sont insérés les pieds (642) des aubes mobiles (64), un passage (P) étant formé entre le fond des alvéoles et les pieds (642) des aubes mobiles (64) insérés dans lesdites alvéoles (632),
- un canal de circulation configuré pour permettre la circulation d'un fluide, le canal de circulation comprenant ledit passage (P),
- un dispositif de calibration configuré pour permettre l'écoulement d'un premier débit de fluide dans le canal de circulation lorsque la température au sein du canal de circulation est inférieure à une valeur seuil prédéterminée de température, et pour changer d'état de manière à permettre l'écoulement d'un deuxième débit de fluide, supérieur au premier débit, dans le canal de circulation, lorsque la température au sein du canal de circulation est supérieure ou égale à ladite valeur seuil prédéterminée de température, **caractérisé en ce que** le dispositif de calibration comprend un matériau fusible configuré pour fondre au moins en partie lorsque la température au sein du canal de circulation atteint la valeur seuil prédéterminée.

2. Rotor selon la revendication 1, dans lequel le dispositif de calibration comprend au moins une partie (90) du pied (642) d'au moins une aube mobile (64) du disque mobile (63).

3. Rotor selon la revendication 2, dans lequel ladite partie (90) du pied d'aube (642) est configurée pour passer d'un premier état dans lequel elle présente une première structure géométrique, lorsque la température au sein du canal de circulation est inférieure à la valeur seuil prédéterminée, à un deuxième état dans lequel elle présente une deuxième structure géométrique différente de la première structure géométrique et entraînant une augmentation de la section du passage (P) existant entre le fond des alvéoles (632) et le pied (642) des aubes mobiles (64), lorsque la température au sein du canal de circulation est supérieure ou égale à ladite valeur seuil prédéterminée.

4. Rotor selon la revendication 2 ou 3, dans lequel ladite partie (90) du pied d'aube (642) comprend le matériau fusible.

5. Rotor selon l'une quelconque des revendications 1 à 4, comprenant une paroi annulaire (101) s'étendant axialement entre deux disques mobiles (63) du rotor, la paroi annulaire (101) comprenant une pluralité d'orifices de circulation (102), le canal de circulation comprenant ladite pluralité d'orifices (102), le dispositif de calibration comprenant au moins une rondelle fusible (92) fixée sur au moins un orifice de circulation (102') de la pluralité d'orifices (102).

6. Rotor selon la revendication 5, dans lequel ladite rondelle fusible (92) est configurée pour passer d'un premier état dans lequel elle présente une première structure géométrique définissant le diamètre de l'orifice de circulation (102') sur lequel elle est fixée, lorsque la température au sein du canal de circulation est inférieure à la valeur seuil prédéterminée, à un deuxième état dans lequel elle présente une deuxième structure géométrique différente de la première structure géométrique et entraînant une augmentation du diamètre dudit orifice (102'), lorsque la température au sein du canal de circulation est supérieure ou égale à ladite valeur seuil prédéterminée.

7. Rotor selon la revendication 5 ou 6, dans lequel ladite rondelle fusible (92) comprend le matériau fusible.

8. Rotor selon l'une quelconque des revendications 1 à 7, comprenant une pluralité de disques mobiles (63), le dispositif de calibration étant disposé sur un disque mobile amont (63a) de la pluralité de disques mobiles (63), le disque mobile amont (63a) étant disposé en amont de la pluralité de disques mobiles (63) selon le sens d'écoulement d'un air chaud le long de l'axe de rotation du rotor.

9. Rotor selon l'une quelconque des revendications 1 à 8, dans lequel la valeur seuil de température est comprise entre 700 et 850 °C.

10. Turbine (60) pour turbomachine d'aéronef comprenant une veine annulaire d'écoulement d'air chaud et le rotor selon l'une quelconque des revendications précédentes.

## Patentansprüche

1. Turbinenrotor (60) für Flugtriebwerk, umfassend:
- mindestens eine bewegliche Scheibe (63), die bewegliche Blätter (64) trägt, wobei die bewegliche Scheibe (63) mehrere Waben (632) umfasst, in denen die Füße (642) der beweglichen Blätter (64) eingesetzt sind, wobei ein Durchgang (P) zwischen dem Boden der Waben und den Füßen (642) der beweglichen Blätter (64) gebildet ist, die in die Waben (632) eingesetzt sind,
- einen Umlaufkanal, der dazu ausgestaltet ist, den Umlauf eines Fluids zu ermöglichen, wobei der Umlaufkanal den Durchgang (P) umfasst,
- eine Kalibrierungsvorrichtung, die dazu ausgestaltet ist, die Strömung einer ersten Fluiddurchflussmenge in dem Umlaufkanal zu erlauben, wenn die Temperatur in dem Umlaufkanal niedriger als ein vorbestimmter Temperaturschwellenwert ist, und derart den Zustand zu wechseln, dass die Strömung einer zweiten Fluiddurchflussmenge, die höher als die erste Durchflussmenge ist, in dem Umlaufkanal ermöglicht wird, wenn die Temperatur in dem Umlaufkanal höher oder gleich dem vorbestimmten Temperaturschwellenwert ist, **dadurch gekennzeichnet, dass** die Kalibrierungsvorrichtung ein schmelzbares Material umfasst, das dazu ausgestaltet ist, zumindest teilweise zu schmelzen, wenn die Temperatur in dem Umlaufkanal den vorbestimmten Schwellenwert erreicht.

2. Rotor nach Anspruch 1, wobei die Kalibrierungsvorrichtung mindestens einen Teil (90) des Fußes (642) mindestens eines beweglichen Blatts (64) der beweglichen Scheibe (63) umfasst.

3. Rotor nach Anspruch 2, wobei der Teil (90) des Blattfußes (642) dazu ausgestaltet ist, von einem ersten Zustand, in dem er eine erste geometrische Struktur aufweist, wenn die Temperatur in dem Umlaufkanal niedriger als der vorbestimmte Schwellenwert ist, in einen zweiten Zustand überzugehen, in dem er eine zweite geometrische Struktur aufweist, die sich von der ersten geometrischen Struktur unterscheidet, und eine Vergrößerung des Querschnitts des Durchgangs (P) herbeiführt, der zwischen dem Boden der Waben (632) und dem Fuß (642) der beweglichen Blätter (64) vorhanden ist, wenn die Temperatur in dem Umlaufkanal höher oder gleich dem vorbestimmten Schwellenwert ist.

4. Rotor nach Anspruch 2 oder 3, wobei der Teil (90) des Blattfußes (642) das schmelzbare Material umfasst.

5. Rotor nach einem der Ansprüche 1 bis 4, der eine ringförmige Wand (101) umfasst, die sich axial zwischen zwei beweglichen Scheiben (63) des Rotors erstreckt, wobei die ringförmige Wand (101) mehrere Umlauföffnungen (102) umfasst, wobei der Umlaufkanal die mehreren Öffnungen (102) umfasst und die Kalibrierungsvorrichtung mindestens eine schmelzbare Unterlegscheibe (92) umfasst, die an mindestens einer Umlauföffnung (102') der mehreren Öffnungen (102) befestigt ist.

6. Rotor nach Anspruch 5, wobei die schmelzbare Unterlegscheibe (92) dazu ausgestaltet ist, von einem ersten Zustand, in dem sie eine erste geometrische Struktur aufweist, die den Durchmesser der Umlauföffnung (102') definiert, an der sie befestigt ist, wenn die Temperatur in dem Umlaufkanal niedriger als der vorbestimmte Schwellenwert ist, in einen zweiten Zustand überzugehen, in dem sie eine zweite geometrische Struktur aufweist, die sich von der ersten geometrischen Struktur unterscheidet und eine Vergrößerung des Durchmessers der Öffnung (102') herbeiführt, wenn die Temperatur in dem Umlaufkanal höher oder gleich dem vorbestimmten Schwellenwert ist.

7. Rotor nach Anspruch 5 oder 6, wobei die schmelzbare Unterlegscheibe (92) das schmelzbare Material umfasst.

8. Rotor nach einem der Ansprüche 1 bis 7, der mehrere bewegliche Scheiben (63) umfasst, wobei die Kalibrierungsvorrichtung an einer stromaufwärtigen beweglichen Scheibe (63a) von den mehreren beweglichen Scheiben (63) angeordnet ist, wobei die stromaufwärtige bewegliche Scheibe (63a) stromaufwärts der mehreren beweglichen Scheiben (63) gemäß der Strömungsrichtung einer heißen Luft entlang der Drehachse des Rotors angeordnet ist.

9. Rotor nach einem der Ansprüche 1 bis 8, wobei der Temperaturschwellenwert zwischen 700 und 850 °C beträgt.

10. Turbine (60) für Flugtriebwerk, die einen ringförmigen Heißluft-Strömungsstrahl und den Rotor nach einem der vorhergehenden Ansprüche umfasst.

## Claims

1. A turbine rotor (60) for aircraft turbine engine comprising:
- at least one mobile disc (63) supporting mobile blades (64), the mobile disc (63) comprising a plurality of slots (632) in which are inserted the roots (642) of the mobile blades (64), a passage (P) being formed between the bottom of the slots and the roots (642) of the mobile blades (64) inserted into said slots (632),
- a circulation channel configured to allow circulation of fluid, the circulation channel comprising said passage (P),
- a calibration device configured to allow flow of a first fluid flow rate in the circulation channel when the temperature within the circulation channel is less than a predetermined temperature threshold value, and to change state so as to allow flow of a second fluid flow rate, greater than the first flow rate, in the circulation channel, when the temperature within the circulation channel is greater than or equal to said predetermined temperature threshold value, **characterized in that** the calibration device comprises a fusible material configured to melt at least in part when the temperature within the circulation channel reaches the predetermined threshold value.

2. The rotor according to claim 1, wherein the calibration device comprises at least one part (90) of the root (642) of at least one mobile blade (64) of the mobile disc (63).

3. The rotor according to claim 2, wherein said part (90) of the blade root (642) is configured to shift from a first state wherein it has a first geometric structure, when the temperature within the circulation channel is less than the predetermined threshold value, to a second state wherein it has a second geometric structure different to the first geometric structure and causing an increase of the section of the passage (P) existing between the bottom of the slots (632) and the root (642) of the mobile blades (64), when the temperature within the circulation channel is greater than or equal to said predetermined threshold value.

4. The rotor according to claim 2 or 3, wherein said part (90) of the blade root (642) comprises the fusible material.

5. The rotor according to any one of claims 1 to 4, comprising an annular wall (101) extending axially between two mobile discs (63) of the rotor, the annular wall (101) comprising a plurality of circulation orifices (102), the circulation channel comprising said plurality of orifices (102), the calibration device comprising at least one fusible washer (92) fixed on at least one circulation orifice (102') of the plurality of orifices (102).

6. The rotor according to claim 5, wherein said fusible washer (92) is configured to shift from a first state wherein it has a first geometric structure defining the diameter of the circulation orifice (102') on which it is fixed, when the temperature within the circulation channel is less than the predetermined threshold value, to a second state wherein it has a second geometric structure different to the first geometric structure and causing an increase in the diameter of said orifice (102'), when the temperature within the circulation channel is greater than or equal to said predetermined threshold value.

7. The rotor according to claim 5 or 6, wherein said fusible washer (92) comprises the fusible material.

8. The rotor according to any one of claims 1 to 7, comprising a plurality of mobile discs (63), the calibration device being positioned on an upstream mobile disc (63a) of the plurality of mobile discs (63), the upstream mobile disc (63a) being positioned upstream of the plurality of mobile discs (63) according to the direction of flow of hot air along the axis of rotation of the rotor.

9. The rotor according to any one of claims 1 to 8, wherein the threshold temperature value is between 700 and 850°C.

10. A turbine (60) for aircraft turbine engine comprising an annular vein of hot air flow and the rotor according to any one of the preceding claims.
